Europäisches Patentamt

European Patent Office

Office européen des brevets

(11) Publication number: 0 607 613 A1

# EUROPEAN PATENT APPLICATION

(21) Application number: 93120908.4

(22) Date of filing: 27.12.93

(51) Int. Cl.5: G06F 7/00, G06F 15/18,
G06F 9/44

(30) Priority: 28.12.92 JP 348173/92

(43) Date of publication of application:
27.07.94 Bulletin 94/30

(84) Designated Contracting States:
DE FR

(71) Applicant: NEC CORPORATION
7-1, Shiba 5-chome
Minato-ku
Tokyo 108-01(JP)

(72) Inventor: Takahashi, Kousuke, c/o NEC
Corporation
7-1, Shiba 5-chome,
Minato-ku
Tokyo(JP)
Inventor: Thornber, Karvel K.
23 Mercier Place
NJ 07922(US)

(74) Representative: Betten & Resch
Reichenbachstrasse 19
D-80469 München (DE)

(54) Fuzzy inference system for learning inference rules.

(57) A proposition truth value storing means (100) stores a truth value $\mu A$ of a first proposition part (A) and a truth value $\mu B$ of a second proposition part (B). A rule truth value learning means 125 learns a rule truth value with $\mu A$ and $\mu B$. (A) rule validity learning means (150) learns a rule validity degree fr. A rule truth value storing means (120) stores the rule truth value. A rule validity degree storing means (130) stores the rule validity degree fr. A bounded difference calculating means (160) calculates an inference validity degree (fi). A quantizer (165) determines whether or not (fi) is equal to or larger than a predetermined threshold value. An inference result storing means (170) outputs a rule truth value $\mu R$ as a truth value of the other of the propositions (A) and (B). A minimum value calculating circuit (180) selects the rule validity degree fr or the inference validity degree fi, whichever smaller. A result validity storing means (190) outputs (fr) or (fi), whichever smaller, as an inference result validity degree.

F I G.1

PORTION OPERATING IN LEARNING PERIOD

PORTION OPERATING IN INFERENCE PERIOD

Background of the Invention:

The present invention relates to an information processing system dealing with knowledge information and fuzzy inference, in particular, to a fuzzy inference system for learning the relation of cause and effect with respect to knowledge information.

The fuzzy inference is an inference technique based on a language approximation or a fuzzy logic. The fuzzy inference is introduced by L. A. Zadeh by using the concept of fuzzy set so as to infer information including ambiguity and uncertainty. For example, when "a" is small (A1) and "a" is almost equal to "b" (A2), it can be inferred that "b" is relatively small (B). Thus, in the fuzzy inference, an inference rule of if-then type (where if both propositions A1 and A2 are true, then (B) is true) is used.

The fuzzy inference which has been widely used in home appliances and control machinery is a composition of the inference rule of if-then type and a membership function. With a collated result of a membership function of a first proposition part of an inference rule of if-then type, an optimum value of a second proposition part is interpolated by a defuzzing means such as a weighing method.

Practical techniques for the inference system are described in Japanese Patent Laid-Open Publications Nos. Hei 03-154129, 01-119803, 01-103704 to 01-103707, 63-265309, 61-264411, and so forth. Although the techniques for the inference system have been improved, the basic concept of the inference has not been changed.

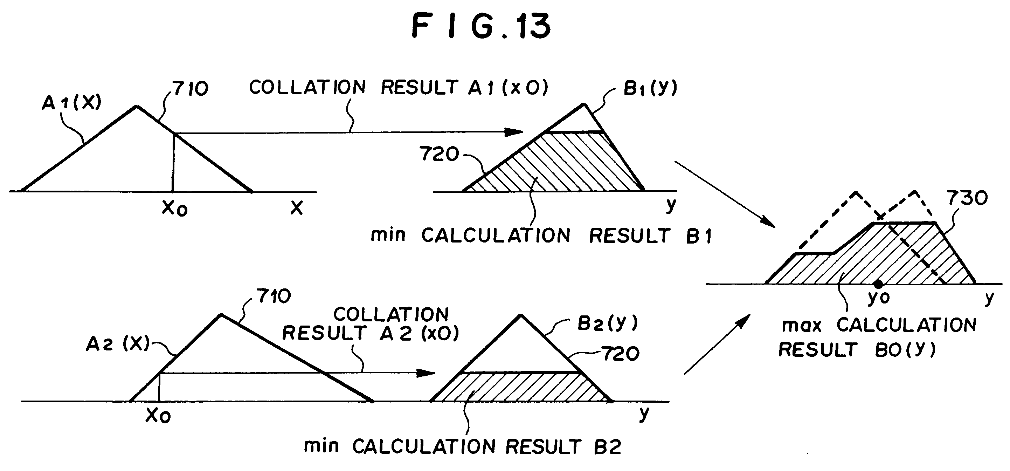

With reference to Fig. 13, a conventional fuzzy inference technique will be described in more detail. Now assume that there are two inference rules. The first inference rule is in that if $A1(x)$ is satisfied, $B1(y)$ takes place. The second inference rule is in that if $A2(x)$ is satisfied, $B2(y)$ takes place. A membership function 710 which collates the first proposition parts of the inference rules represents $A1(x)$ and $A2(x)$. A membership function 720 which collates the second proposition parts of the inference rules represents $B1(y)$ and $B2(y)$. When an input variable x is x0, the membership function 710 gives $A1(x0)$ and $A2(x0)$. Thus, the membership function 710 gives a minimum calculation result B1 corresponding to $A1(x0)$ and $B1(y)$ and a minimum calculation result B2 corresponding to $A2(x0)$ and $B2(y)$. The inferred result of the output variable y of the second proposition part is the maximum value of the calculation result of the minimum calculation results B1 and B2. The maximum calculation result is referred to as a membership function 730. The membership function 730 is given by the following equation.

$$B0(y) = \max \{\min [A1(x0), B1(y)], \min [A2(x0), B2-(y)]\} \quad (1)$$

In the defuzzing means (for example, well-known centroid method), a real output variable y0 is obtained from the membership function $B0(y)$. In this case, y0 which satisfies the following equation is obtained.

$$\int y0 \; B0(y)dy = \int B0(y)dy/2 \quad (2)$$

The membership function of the first proposition part may be a triangle or trapezoid. However, the membership function of the second proposition part may be a singleton so as to simplify the weight calculation.

In this case, since

$$B1(y) = y1, B2(y) = y2 \quad (3)$$

Thus, the real output variable y0 can be approximated by the following equation.

$$y0 = \{y1 \cdot A1(x0) + y2 \cdot A2(x0)\} / \{A1(x0) + A2(x0)\} \quad (4)$$

To effectively apply such a fuzzy inference to control machinery, inference rules with respect to objects to be controlled should be translated into membership functions. In other words, unless the membership functions $A1(x)$ and $A2(x)$ of the first proposition parts and the corresponding membership functions $B1(y)$ and $B2(y)$ of the second proposition parts are given, a desired fuzzy inference may not be obtained. However, if the membership functions and inference rules are properly arranged, the control machinery may properly operate. When the improvement of the control accuracy depends on the subjective sense of the user, this matter is not important.

However, in the field of information processing system, even if it seems that the fuzzy inference sensitively improves the final results, the effect of the improvement is denoted by numeric values. Thus, processes with low effects are dismissed. If there is a logical discrepancy in an intermediate result, the problem becomes apparent.

Since information processing systems mostly use non-fuzzy information, when a fuzzy inference is employed, the information and fuzzy inference should be properly linked. In other words, the fuzzy logic should be consistent with the binary logic. When a fuzzy inference which deals with ambiguous information is performed, an inference result including ambiguity is output. As ambiguity of information decreases, ambiguity of inference result decreases. When ambiguity of information is zero, it is expected that the inference result accords with the result of the binary logic. Thus, inference rules should be determined without subjective sense of the user so as to prevent logical discrepancy unlike with the related art references.

A study for arranging a fuzzy inference with a classical forward (positive) inference (modus ponens) or a classical backward (negative) inference (modus tollens) has been proposed (Karvel K. Thornber, "A New Look at Fuzzy-Logic Inference", FUZZ-IEEE '92 Proceeding, pp 271-278, 1992).

According to the study, a truth value $\mu A$ of a proposition (A) constructing knowledge information is given by the possiblity of which (A) is true rather than by a membership function. An inference rule of if-then type (where if (A) is true, (B) is true) is given by the following implicating logical equation.

$$[A => B] = A' \vee B \qquad (5)$$

To match the fuzzy logic with the classical logic, assume that an implicating truth value $\mu R$ is given by the following equation. In the equation, assume that $\mu A$ and $\mu R$ are values between 0 and 1.

$$\mu R = \mu[A' \vee B] = max [\mu A', \mu B] \qquad (6)$$

where $\mu A' = 1 - \mu A$

These equations are not new. A new approach is in that the inference from $\mu A$ to $\mu B$ (forward inference) and the inference from $\mu B$ to $\mu A$ (backward inference) by the inference rules are defined as follows.

$$If \mu R > \mu A', then \mu B = \mu R \qquad (7)$$

$$If \mu R < \mu A', then \mu A' = \mu R \qquad (8)$$

In this case, if $\mu R$ is 1.0 and $\mu A$ is 1.0 or 0.0, $\mu B$ completely matches the inference result of the classical logic. If $\mu A$ is 0, $\mu B$ is 1. Thus, this expression is suitable for an expansion to hierarchical inference.

In such an expression, the conventional fuzzy inference (forward inference) is given by the following equation.

$$\mu B = min [\mu A, \mu R] \qquad (9)$$

Thus, the conventional fuzzy inference does not match the inference result of the classical logic. When $\mu A$ is 0, $\mu B$ is not 1. Thus, it is convenient for interpolating calculations. However, important characteristics of the classical logic are not transferred to the fuzzy logic. Thus, ambiguity will take place when it is expanded to hierarchical inference.

In the related art references, various inference methods have been proposed on the condition that $\mu R$ is given. Even if inference rules are intuitively allowed, unless the truth value $\mu R$ is given, infer-

ence cannot be performed. However, an advancement where $\mu R$ can be described with a membership function in language expression should be appreciated. For example, with respect to learning of membership functions, efforts of improvements have been made in the related art references Japanese Patent Laid-Open Publication Nos. Hei 03-12983, 03-058201, 03-002931, 02-260002, 02-244203, and 02-089102. However, techniques which more rationally determine $\mu R$ have not been disclosed, thereby delaying development and evaluation of fuzzy inference systems.

As described above, in the conventional fuzzy inference techniques, the consistency of forward inference and backward inference in classical logic is sacrificed. In a fuzzy inference which has such a consistency, the truth values of inference rules are difficult to determine. As a result, fuzzy inference has not been successively incorporated in information processing systems dealing with knowledge information which contains ambiguity.

An object of the present invention is to solve the above-described three problems and to provide a fuzzy inference system for learning inference rules necessary for fuzzy inference so as to perform a fuzzy inference.

Summary of the Invention:

A first aspect of the present invention is a fuzzy inference system for learning inference rules, comprising an extracting means for extracting a first proposition part (A) and a second proposition part (B) of each of the inference rules from a real working system, a proposition truth value storing means for storing a truth value $\mu A$ of the first proposition part (A) and a truth value $\mu B$ of the second proposition part (B) so as to learn the truth values $\mu A$ and $\mu B$, a rule truth value learning means for learning a rule truth value $\mu R$ from a plurality of sets of the truth values $\mu A$ and $\mu B$ in a learning period, a rule validity degree learning means for learning a rule validity degree fr, a rule truth value storing means for storing the rule truth value $\mu R$, a rule validity degree storing means for storing the rule validity degree fr, a calculating means for calculating an inference validity degree fi with the rule truth value $\mu R$ against one of the first proposition part (A) and the second proposition part (B) after the learning period, an inference result storing means for outputting the rule truth value $\mu R$ as the other truth value of the first proposition part (A) and the second proposition part (B) when fi is equal to or higher than a predetermined threshold value, and a resultant validity degree storing means for outputting either the rule validity degree fr or the inference validity degree fi, whichever smaller, as an inference result validity degree.

A second aspect of the present invention is the fuzzy inference system of the first aspect wherein the rule truth value learning means comprises a bounded difference calculating means for calculating a bounded difference between the truth value $\mu B$ and the complement of the truth value $\mu A$ with an output of the proposition truth value storing means, a bounded difference quantizing means for selecting the truth value $\mu B$ as a truth value $\mu Rf$ of a forward inference rule when the absolute value of the bounded difference is equal to or larger than the threshold value and the truth value $\mu B$ is larger than the complement of the truth value $\mu A$ and for selecting the complement of the truth value $\mu A$ as a truth value $\mu Rb$ of a backward inference rule when the absolute value of the bounded difference is equal to or larger than the threshold value and the truth value $\mu B$ is smaller than the complement of the truth value $\mu A$, and a forward/backward rule truth value selecting means for determining a first composition corresponding to a first learning mode of the truth value $\mu B$ or the complement of the truth value $\mu A$ and the rule truth value $\mu R$, and wherein the rule validity degree learning means comprises a forward/backward rule validity degree selecting means for determining a second composition corresponding to a second learning mode of the bounded difference and the content of the rule validity degree storing means.

A third aspect of the present invention is the fuzzy inference system of the second aspect wherein the rule truth value selecting means is adapted to add the product of the rule validity degree fr and the rule truth value $\mu R$ to the product of the bounded difference and the truth value $\mu B$ and to divide the resultant value by the sum of the bounded difference and the rule validity degree fr, wherein the rule validity degree selecting means is adapted to add the product of the rule validity degree fr and the rule truth value $\mu R$ to the product of the bounded difference and the truth value $\mu B$ and to divide the resultant value by the sum of the truth value $\mu B$ and the rule truth value $\mu R$.

A fourth aspect of the present invention is the fuzzy inference system of the second aspect wherein the rule truth value selecting means is adapted to calculate a maximum value $\mu Ro$, a minimum value $\mu Rp$, and an average value $\mu Ra$ with the truth value $\mu B$ or the complement of the truth value $\mu A$, whichever larger, read from the proposition truth value storing means in the learning period and the rule truth value $\mu R$ stored in the rule truth value storing means and to select one of the maximum value $\mu Ro$, the minimum value $\mu Rp$, and the average value $\mu Ra$, and wherein the rule validity degree selecting means is adapted to select the minimum value of the bounded difference and the rule validity degree fr.

A fifth aspect of the present invention is a fuzzy inference system for learning inference rules, comprising a proposition collating means for outputting truth values corresponding to first proposition parts A1, A2, ..., and Am and second proposition parts B1, B2, ... , and Bm of a plurality of inference rules corresponding to a plurality of classes, a proposition truth table storing means for storing the truth values corresponding to respective classes, a plurality of fuzzy inference units including a rule truth value learning means for learning a rule truth value $\mu Rj$ for each class, a rule validity degree learning means for learning a rule validity degree frj, a rule truth value storing means for storing the rule truth value $\mu Rj$, a rule validity degree storing means for storing the rule validity degree frj, an inference result storing means for outputting the rule truth value $\mu Rj$ as the other truth value inferred from a truth value $\mu X$ of a first proposition part (A) or a second proposition part (B) after a learning period, and a result validity degree storing means for outputting a rule validity degree fr or an inference validity degree fij, whichever smaller, calculated with the truth value $\mu X$ and the rule truth value $\mu Rj$ as an inference result validity degree, a maximum value detecting means for detecting a class j which has the maximum value of the inference validity degrees fij which are output from the inference units, and a truth value selecting means for selecting and outputting the content of the inference result storing means of a fuzzy inference unit corresponding to the class j.

A sixth aspect of the present invention is the fuzzy inference system of the fifth aspect wherein the proposition collating means comprises a vector comparing means for storing vector data representing a proposition and for collating each element thereof, a weight coefficient memory for outputting a weight coefficient corresponding to an element match signal received from the vector comparing means, a sum storing means for calculating and storing the sum of weight coefficients, a cumulative value storing means for cumulating and storing weight coefficients which are output from the weight coefficient memory corresponding to element match signals which are output from the vector comparing means corresponding to propositions being input, and a division means for calculating the ratio of the cumulative value and the sum and for outputting the result as a proposition truth value, and wherein the weight coefficients are updated so that the rule validity degree is improved during the learning period.

A seventh aspect of the present invention is the fuzzy inference system of the first aspect wherein the extracting means comprises a real data storing means for storing real data obtained from a real working system, a first storing means for storing the first proposition part (A), a second storing means for storing the second proposition part (B), a first match degree calculating means for calculating a (B) match degree of real data (B) and the second proposition part (B), a second match degree calculating means for calculating an (A) match degree of real data (A) and the first proposition part (A), a maximum value detecting means for detecting the maximum value of the (B) match degree, a switch for sending the real data (B) to the second storing means when the maximum value is detected, a validity degree calculating means for calculating a rule validity degree with the (A) match degree and the (B) match degree, a detecting means for detecting a probability of which the rule validity degree is equal to or higher than a predetermined threshold value, and a data switch for outputting the contents of the first storing means and the second storing means to the outside of the system when the probability is equal to or higher than the threshold value, and wherein the content of the first storing means is updated when the probability is equal to or lower than the threshold value.

An eighth aspect of the present invention is a fuzzy inference method for learning inference rules, comprising the steps of classifying each of the inference rules into a plurality of hierarchical classes, storing the inference rules in an inference unit array having a plurality of inference units disposed in a tree shape, selecting an inference unit array of a lower hierarchy corresponding to inference results of the inference units of upper hierarchy, collating input propositions from the selected inference units by proposition collating means of each inference unit, and selecting inference units of a lower hierarchy corresponding to the collated results.

A ninth aspect of the present invention is a fuzzy inference system for learning inference rules, comprising an inference unit array having a plurality of inference units, each of which has proposition collating means corresponding to the inference rules corresponding to the classes, a hierarchical inference rule data storing means for storing hierarchical inference rule data so as to set a truth value, a validity degree, and a proposition of each of the hierarchical inference rule to the inference unit array, and a chain inference assisting means for setting inference rule data of a lower hierarchy or a higher hierarchy selected by a class inferred in each hierarchical layer to the inference unit array, wherein each of the inference unit is adapted to learn an inference rule and a proposition and to store the results in the hierarchical inference rule data storing means.

Detailed Description:

The fuzzy inference system of the present invention provides the following five major features.

1. The fuzzy inference system of the present invention learns a truth value $\mu R$ and its validity degree fr of each of a plurality of inference rules with truth values $\mu A$ of first proposition parts and truth values $\mu B$ of second proposition parts of the inference rules.

2. The fuzzy inference system of the present invention outputs a forward inference, where $\mu B$ is inferred from $\mu A$, and a validity degree thereof with the truth value $\mu R$ and its validity degree fr which have been learnt for each of the inference rules. In addition, the fuzzy inference system outputs a backward inference, where $\mu A$ is inferred from $\mu B$, and its validity value.

3. The fuzzy inference system of the present invention has an inference unit array which collates propositions against inference rules corresponding to respective classes and learns truth values $\mu Rj$ and $\mu R'j$ and validity degrees frj and f'rj of inference rules with a plurality of sets of $\mu Aj$, $\mu Bj$, $\mu A'$, and $\mu B'j$ as the collated results.

4. The fuzzy inference system of the present invention has a plurality of inference units, each of which stores a plurality of inference rules corresponding to respective classes, so as to collate an input proposition with first proposition parts of the inference rules, inference a truth value, calculate an inference validity degree, and output an inference result with a maximum value of the inference validity degree.

5. The fuzzy inference system of the present invention extracts a proposition corresponding to a first proposition part and a second proposition part of each of inference rules corresponding to respective classes, from a real working system, updates a proposition so as to enhance a validity degree of each of truth values of the inference rules, and corrects a weight for collating the propositions.

Thus, according to the present invention, inference rules can be extracted from knowledge information which contains ambiguity. With the extracted truth values and their validity degrees thereof, a fuzzy inference can be performed. When the truth value $\mu R$ is 1 or 0 and the validity degree fr is 1.0, the fuzzy inference matches an inference rule of classical logic. Thus, as ambiguity of fuzzy inference approaches to zero, the fuzzy inference result consistently approaches to an inference result of classical logic. Both the fuzzy inference and the classical logical inference can be consistently incorporated in information processing which deals with knowledge information.

The present invention will be more clearly understood from the following detailed description with reference to the accompanying drawings.

Brief Description of the Drawings:

FIGURE 1 is a Block diagram showing a fuzzy inference system for learning a fuzzy inference rule and for executing a fuzzy inference with the result thereof according to a first embodiment of the present invention;

FIGURE 2 is a block diagram showing a bounded difference calculating means of FIGURE 1;

FIGURE 3 is a block diagram showing a rule truth value selecting means of FIGURE 1;

FIGURE 4 is a block diagram showing a quantizing means of FIGURE 1;

FIGURE 5 is a block diagram showing a rule truth value selecting means and a rule validity degree selecting means of FIGURE 1;

FIGURE 6 is a block diagram showing a minimum value calculating circuit of FIGURE 1;

FIGURE 7 is a block diagram showing a fuzzy inference system using a plurality of inference rules according to a second embodiment of the present invention;

FIGURE 8 is a block diagram showing a proposition collating means of FIGURE 7;

FIGURE 9 is a block diagram showing a fuzzy inference system for extracting a first part proposition of an inference rule from a real working system according to a third embodiment of the present invention;

FIGURE 10 is a block diagram showing a fuzzy inference system for performing an inference in a plurality of hierarchical levels according to fourth and fifth embodiments of the present invention;

FIGURE 11 is a block diagram showing a fuzzy inference system for performing an inference of a plurality of hierarchical levels according to the fourth embodiment of the present invention;

FIGURE 12 is a block diagram showing a fuzzy inference system for performing an inference in a plurality of hierarchical levels according to the fifth embodiment of the present invention; and

FIGURE 13 is a schematic diagram for explaining a basic operation of a conventional fuzzy inference.

Description of the Prefered Embodiments:

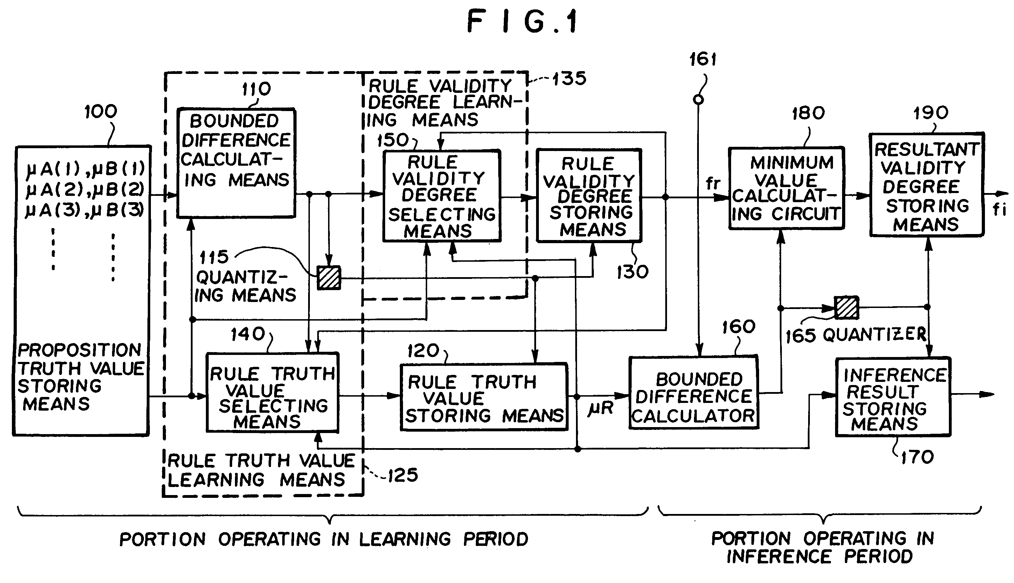

FIGURE 1 shows an fuzzy inference system according to a first embodiment of the present invention.

Referring to FIGURE 1, the fuzzy inference system does not include a means which extracts a first proposition part (A) and a second proposition part (B) of an inference rule from a real working system. The fuzzy inference system comprises a proposition truth value storing means 100, a rule truth value learning means 125, a rule validity degree learning means 135, a rule truth value storing means 120, a rule validity degree storing means 130, a bounded difference calculating means 160, a quantizer 165, an inference result storing means 170, a minimum value calculating circuit 180, and a resultant validity degree storing means 190.

The proposition truth value storing means 100 stores a plurality of sets of truth values $\mu A$ of first proposition parts (A) and truth values $\mu B$ of second proposition parts (B) which are extracted from the real working system. The rule truth value learning means 125 learns a rule truth value $\mu R$ from a plurality of sets of truth values $\mu A$ and $\mu B$ in a learning period. The rule validity degree learning means 135 learns a rule validity degree fr. The rule truth value storing means 120 stores the rule truth value which has been learnt. The rule validity degree storing means 130 stores the rule validity degree fr which has been learnt. The bounded difference calculating means 160 calculates an inference validity degree fi with the rule truth value $\mu R$ for a truth value of one of propositions (A) and (B) received from an input terminal 161. The quantizer 165 determines whether or not the inference validity degree fi is equal to or larger than a predetermined threshold value. The inference result storing means 170 outputs the rule truth value $\mu R$ as the other truth value of the proposition (A) or (B) corresponding to the output of the quantizer 165. The minimum value calculating circuit 180 selects either the rule validity degree fr or the inference validity degree, whichever smaller. The resultant validity degree storing means 190 outputs either the rule validity degree fr or the inference validity degree which has been selected by the minimum value calculating circuit 180, whichever smaller, as an inference result validity degree.

The rule truth value learning means 125 comprises a bounded difference calculating means 110, a quantizing means 115, and a rule truth value selecting means 140. The bounded difference calculating means 110 calculates the bounded difference between $\mu A(t)$ and $\mu B(t)$ which are read from the proposition truth value storing means 100. The bounded difference is given by the following equation.

$$f(t) = \mu B(t) - \mu A'(t) = \mu A(t) + \mu B(t) - 1 \qquad (10)$$

The quantizing means 115 determines whether or not the absolute value of the bounded difference f(t) is equal to or larger than a predetermined threshold value and generates a "1" set signal when the absolute value of the bounded difference f(t) is equal to or larger than the predetermined threshold value. The rule truth value selecting means 140 determines a sequence of rule truth values corresponding to a learning mode for use. In other words, the rule truth value selecting means 140 determines a composition of $\mu$B(t) or (1-$\mu$A(t)) and $\mu$R(t-1).

Corresponding to the equation (6), the bounded difference calculating means 110 defines a truth value $\mu$Rf of a forward inference rule for inferring $\mu$B from $\mu$A and a truth value $\mu$Rb of a backward inference rule for inferring $\mu$A from $\mu$B in the following inference rule

$$\mu R(t) = \mu[A(t) \lor B(t)] = \max[\mu A'(t), \mu B(t)] \qquad (11)$$

where $\mu$A'(t) = 1 - $\mu$A(t)
as

$$\text{if } \mu B(t) > \mu A'(t), \text{ then } \mu Rf(t) = \mu B(t) \qquad (12)$$

$$\text{if } \mu B(t) < \mu A'(t), \text{ then } \mu Rb(t) = \mu A'(t) \qquad (13)$$

A conditional equation which selects one of such inference rules to be learnt is determined by the sign of the equation (10). If the polarity is plus, then $\mu$Rf(t) is obtained. If the polarity is minus, then $\mu$Rb(t) is obtained.

The rule truth value learning means 125 comprises the quantizing means 115, the forward/backward inference rule truth value selecting means 140, and the forward/backward inference rule validity degree selecting mens 150. When the absolute value of a bounded difference is equal to or larger than a predetermined threshold value and $\mu$B is larger than the complement of $\mu$A, the quantizing means 115 selects $\mu$B as a truth value $\mu$Rf of a forward inference rule. When the absolute value of the bounded difference is equal to or larger than the threshold value and $\mu$B is smaller than the complement of $\mu$A, the quantizing means 115 selects the complement of $\mu$A as a truth value $\mu$Rb of a backward inference rule. The forward/backward inference rule truth value selecting means 140 determines a composition of $\mu$B or the complement of $\mu$A and $\mu$R corresponding to a learning mode. The forward/backward inference rule validity degree selecting means 150 determines a composition corresponding to the bounded difference and the learning mode which is the content of the rule validity degree storing means 130. Thus, the rule truth value learning means 125 learns forward and backward inference rules. When necessary, the rule truth value storing means 120 and the rule validity degree storing means 130 may have circuits which respectively store forward and backward inference rules. However, in most cases, forward inference rules are learnt. For the sake of simplicity, the description of backward inference rules is omitted. Thus, it is defined that the bounded difference is a positive f(t) which is obtained from the equation (10).

Learning algorithm is constructed of rule truth value learning and rule validity degree learning which are executed by the rule truth value selecting means 140 and the rule validity degree selecting means 150, respectively. A plurality of sets of $\mu$A(t) and $\mu$B(t) which are read from the proposition truth value memory 100 are learning samples. These samples are used for learning truth values and validity degrees of forward inference rules so that f(t) of the equation (10) becomes positive. When f(t) is negative, backward inference rules can be learnt.

The learning method of rules preferably accords with the thinking and memorizing method of human beings. Such a learning algorithm can be accomplished by a probability approximation learning mode which weights a truth value with a high validity degree.

The recursive arithmetic operation of the probability approximation learning mode is given by the following equations.

$$\mu R(t) = \{f(t)\mu B(t) + fr(t-1)\mu R(t-1)\}/\{f(t) + fr(t-1)-\} \qquad (14)$$

$$fr(t) = \{f(t)\mu B(t) + fr(t-1)\mu R(t-1)\}/\{\mu B(t) + \mu R(t-1)-\} \qquad (15)$$

Although complicated arithmetic operations are required, all the variables of these equations are obtained in the system shown in FIGURE 1. Thus, each learning sample can be always calculated. After the last sample (t = m) in the learning period has been calculated, the following rule truth value and the validity degree are obtained.

$$\mu R = \mu R(m) \qquad (16)$$

$$fr = fr(m) \qquad (17)$$

To simplify the arithmetic operations and approximately obtain the above $\mu$R and fr, optimism-pessimism average learning mode may be used. This mode imitates a learning method of optimistic and pessimistic rules of human beings. In the rule truth value learning means 125, the rule truth value selecting means 140 obtains one of $\mu$B(t) and the complement of $\mu$A(t), whichever larger, which are read from the proposition truth value storing means 100 in the learning period. In addition, the rule truth value selecting means 140 obtains the maximum value $\mu$Ro(t), the minimum value $\mu$Rp(t), and the average value $\mu$Ra(t) of $\mu$R(t-1) stored in the rule truth value storing means 120. Moreover, the rule truth value selecting means 140 selects the average value $\mu$Rop(t) of $\mu$Ro(t) and $\mu$Rp(t) or the average value $\mu$Ra(t). The rule validity degree learning means 135 has the rule validity degree selecting means 150, which selects the minimum value of the bounded difference f(t) and fr(t-1).

Thus, the optimism-pessimism average learning mode is accomplished. With respect to forward inference rules, such average values can be obtained by the following simple arithmetic operations.

$$\mu Ro(t) = max \{\mu B(t), \mu Ro(t-1)\} \qquad (18)$$

$$\mu Rp(t) = min \{\mu B(t), \mu Rp(t-1)\} \qquad (19)$$

$$\mu Rop(t) = \{\mu Ro(t) + \mu Rp(t)\} / 2 \qquad (20)$$

$$\mu Ra(t) = \{\mu B(t) + \mu Ra(t-1)\} / 2 \qquad (21)$$

$$fr(t) = min \{f(t), fr(t-1)\} \qquad (22)$$

The reason the rule validity degree selecting means selects the minimum value of the bounded difference f(t) and fr(t-1) with min operation is in that the logical product of the validity degree of each arithmetic operation of is equivalent to the validity degree of all the arithmetic operations.

As described above, the truth value learning mode is accomplished by the rule truth value selecting means 140, whereas the validity degree learning mode is accomplished by the rule validity degree selecting means 150.

After the inference rule has been learnt, the rule truth value $\mu$R and the validity degree fr are stored in the rule truth value storing means 120 and the rule validity degree storing means 130, respectively. When the input of $\mu$A or $\mu$B' from the terminal 161 is designated, it is determined whether the rule is used for a forward inference or a backward inference. In this embodiment, only the forward inference is considered. Thus, the bounded difference calculating circuit 160 calculates the following inference validity degree fi.

$$fi = \mu Rf - \mu A' \qquad (23)$$

When the quantizer 165 detects fi > $\theta$ - (threshold value), it sends a "1" set signal to the inference result storing means 170 and the resultant validity degree storing means 190. Thus, $\mu$B = $\mu$Rf which is the inference result of the proposition (B) against the truth value $\mu$B is stored in the inference result storing means 170. When the value of fi is negative, if -fi > $\theta$, $\mu$A' = $\mu$Rb is inferred.

On the other hand, the rule validity degree fr or the inference validity degree fi of the forward inference, whichever smaller, is written to the resultant validity degree storing means 190. (When the value of inference validity degree fi is negative, either -fi or the rule validity degree fr of the backward inference, whichever smaller, is written to the resultant validity degree storing means 190.) Thus, the validity degree fo of the inference result stored in the resultant validity degree storing means 190 is given by the following equation.

$$fo = min \{fr, fi\} \qquad (26)$$

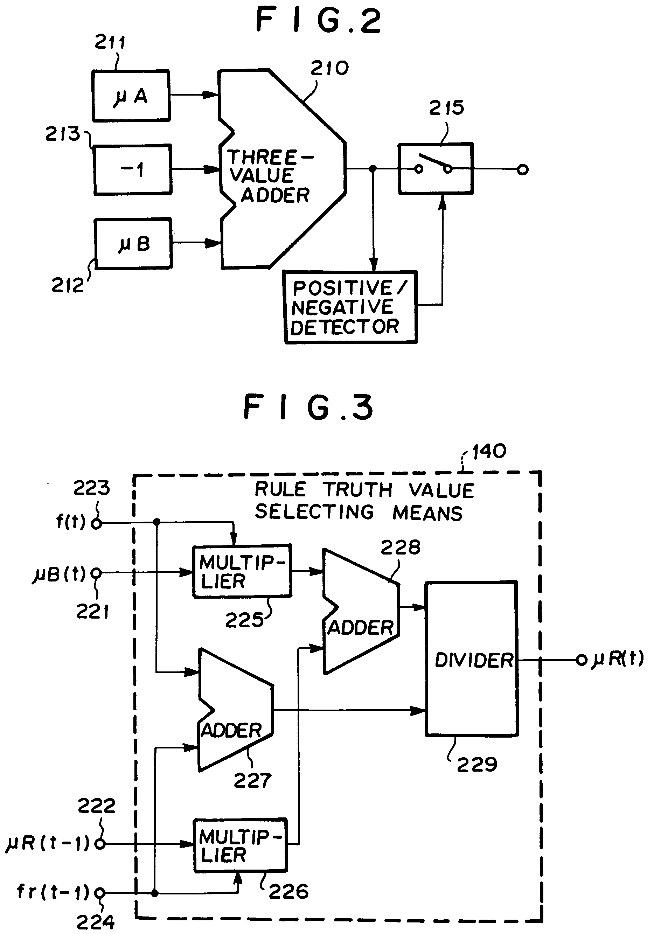

Figs. 2 to 7 are block diagrams of the constructional elements of the fuzzy inference system of FIGURE 1.

FIGURE 2 is a block diagram showing the bounded difference calculating circuit 110 according to the embodiment of the present invention. In the bounded difference calculating circuit 110, for a forward inference, a three-value adder 210 adds $\mu$A, $\mu$B, and -1 received from input buffers 211, 212, and 213 so as to calculate a bounded difference thereof. If the calculated value of the adder 210 is positive, an output switch 215 outputs this value. Otherwise, the output switch 215 outputs zero.

FIGURE 3 is a block diagram showing the rule truth value selecting means 140 according to the embodiment of the present invention. Assume that $\mu$B(t) and $\mu$R(t-1) are received from input terminals 221 and 222, respectively, and f(t) and fr(t) are received from terminals 223 and 224, respectively. At this point, a divider 229 outputs new and old compositions of a rule truth value according to a learning mode. In this embodiment, as the learning mode, the above-described probability approximation learning mode given by the equations (14) and (15) is used. Thus, although the circuitry is complicated, when the signals of the input terminals 221 and 223 of the rule truth value selecting means 220 are exchanged each other and the signals of the input terminals 222 and 224 are exchanged each other, the rule truth value selecting means 140 accords with the rule validity degree selecting means 150.

The rule truth value selecting means 140 comprises two multipliers 225 and 226, two adders 228 and 227, and a divider 229. The multiplier 225 calculated f(t)$\mu$B(t). The multiplier 226 calculates fr(t-1)$\mu$R(t-1). The adder 228 adds the outputs of the multipliers 225 and 226 so as to calculate the sum of product thereof. The adder 227 adds f(t) and fr(t-1). The divider 229 calculates the ratio of the sum of produce received from the adder 228 and the sum received from the adder 227.

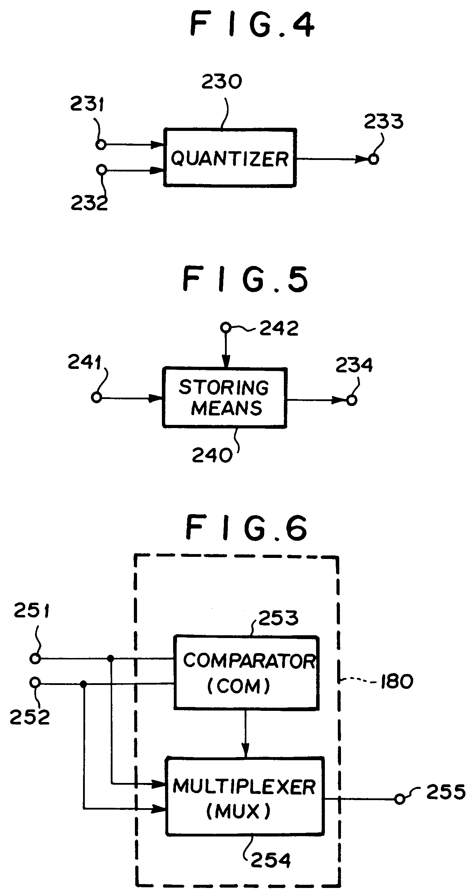

FIGURE 4 is a block diagram showing the quantizer 230 according to the embodiment of the present invention. The quantizer 230 is a comparing circuit which outputs the polarity of the difference between an absolute value f of a bounded difference received from an input terminal 231 and a threshold value $\theta$ received from an input terminal 232 from an output terminal 233. When the polarity is plus, the quantizer 230 outputs "1". When the polarity is minus, the quantizer 230 outputs "0".

FIGURE 5 is a block diagram showing the rule truth value storing means 120 and the rule validity degree storing means 130 according to the embodiment of the present invention. In the drawing, a storing means 240 is known as a register. When a "1" set signal is received from a set terminal 242, data received from an input terminal 241 is stored in the storing means 240. Unless another "1" set signal is received, the content of the storing means 240 is not changed. The content of the storing means 240 is always output from an output terminal 243.

FIGURE 6 is a block diagram showing the minimum value calculating circuit 180 according to the embodiment of the present invention. In the minimum value calculating circuit 180, a comparing circuit (COM) 253 compares signals fr and fi received from respective input terminals 251 and 252 and outputs a polarity signal to a multiplexer 254. The multiplexer 254 outputs either the input signal fr or fi whichever smaller to an output terminal 255. When the input terminals of the input signals of the MUX 254 are exchanged each other, the larger value is output from the output terminal 255.

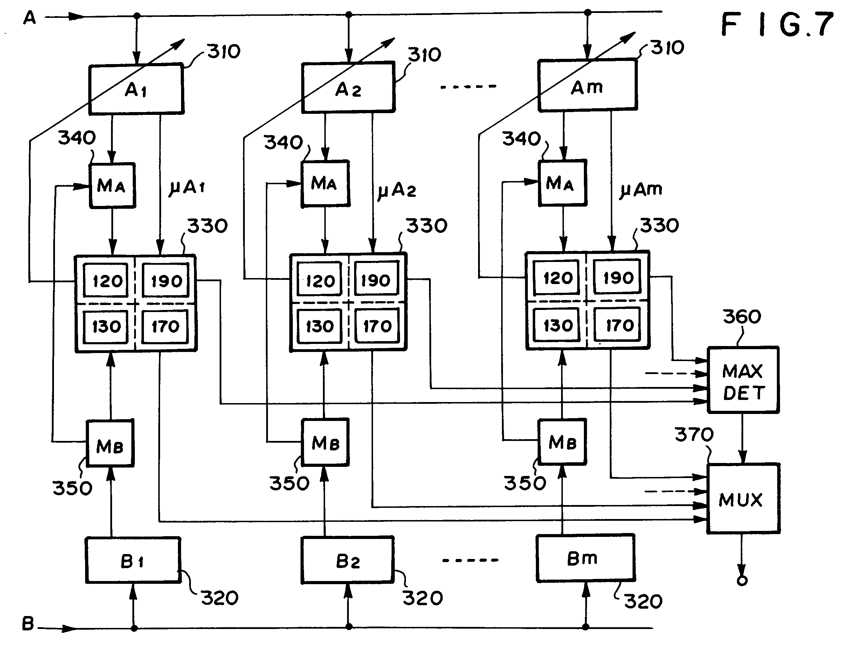

FIGURE 7 is a block diagram showing a fuzzy inference system using a plurality of inference rules according to a second embodiment of the present invention. The fuzzy inference system comprises a first proposition part collating means 310, a second proposition part collating means 320, a first proposition part truth value storing means 340, a second proposition part truth value storing means 350, a plurality of fuzzy inference units 330, a maximum value detecting means 360, and a truth value selecting means 370.

The first proposition collating means 310 outputs truth values of first proposition parts A1, A2, ... and Am of a plurality of inference rules for respective classes. The second proposition collating means 320 outputs truth values of second proposition parts B1, B2, ... and Bm of a plurality of inference rules for respective classes. The first proposition part truth value storing means 340 stores the truth values for the respective classes received from the first proposition part collating means 310.

The second proposition part truth value storing means 350 stores the truth values for the respective classes received from the second proposition part collating means 320. Each of the fuzzy inference units 330 comprises a rule truth value learning means 125 (not shown), a rule validity degree learning means 135 (not shown), a rule truth value storing means 120, a rule validity degree storing means 130, an inference result storing means 170, and a resultant validity degree storing means 190.

The rule truth value learning means 125 learns rule truth values $\mu Rj$ for the respective classes. The rule validity degree learning means 135 learns the rule validity degree frj. The rule truth value storing means 120 stores $\mu Rj$. The rule validity degree storing means 130 stores frj. The inference result storing means 170 outputs $\mu Rj$ as the other truth value inferred from one truth value $\mu X$ of the proposition (A) and (B) after a learning period. The resultant validity degree storing means 190 outputs one of rule validity degree fr and inference validity degree fi, whichever smaller, which are calculated with $\mu X$ and $\mu Rj$. Thus, the resultant validity degree storing means 190 outputs the validity degree of the inference result. The maximum detecting means 360 detects a class j with the maximum value of inference validity degrees fij received from the inference units 330. The truth value selecting means 370 selectively outputs the content of the inference result storing means 170 of a fuzzy inference unit 330 corresponding to the class j with a maximum value.

The features of the fuzzy inference system according to the second embodiment of the present invention are as follows:

(1) Propositions of a plurality of inference rules for respective classes are collated.

(2) A plurality of inference units each learn truth values $\mu Rj$ and $\mu R'j$ and validity degrees frj and f'rj with a plurality of sets of $\mu Aj$, $\mu Bj$, $\mu A'j$, and $\mu B'j$ for respective classes.

(3) The inference units each compare the inference validity degrees so as to determine an inference rule with a first proposition part which is closest to an input proposition.

(4) A truth value of an inference unit with the maximum value of inference validity degrees is output as a total inference result.

With $\mu Aj$ and $\mu Bj$ for each class, when an inference unit 330 learns a truth value $\mu Rj = \mu [Aj => Bj]$ of an inference rule where if Aj is true, then Bj is true, the inference unit 330 also learns a truth value $\mu R'j = \mu [A'j => B'j]$ of a negative inference rule where if A'j is true, then B'j is true. This is because a desired class can be easily identified. According to the classical logical inference, only when a truth value $\mu Rj = \mu [Aj => Bj]$ of a forward inference rule is used, even if Aj is not true, $\mu Bj = \mu Rj$ may be incorrectly inferred. However, when a truth value $\mu R'j = \mu [A'j => B'j]$ of an inference rule is used, the relation of $\mu Bj \neq \mu Rj$ can be easily inferred. When Aj is true, if Ak is also determined true in another class (namely, when both the truth values are very large), the classes are determined with validity degrees. A validity degree frj corresponding to $\mu Rj = \mu [Aj => Bj]$ and a validity degree f'rj corresponding to $\mu R'j = \mu [A'j => B'j]$ can be learnt. However, classes can be determined only with frj . This is because classes which are less related are not often used.

In the conventional fuzzy inference, when one of a plurality of inference rules to be applied is determined, since inference results for respective classes are mixed and the average thereof is obtained (namely, defuzzing technique is used), backward inference is not easily applied. However, in the construction shown in FIGURE 7, if backward inference is given, a negative forward inference rule is substituted with a positive backward inference rule by applying the following equation.

$\mu R'j = \mu [A'j => B'j] = max [\mu A, \mu B'] = \mu [Bj => Aj]$     (27)

Thus, an inference of $\mu A$ from $\mu Bj$ can be accomplished in the following condition.

if $\mu B' < \mu R'j$, then $\mu A = \mu R'j$     (28)

Thus, even if a plurality of inference rules are used, it seems that backward inference may be performed. This is an important feature for incorporating fuzzy inference into information processing systems.

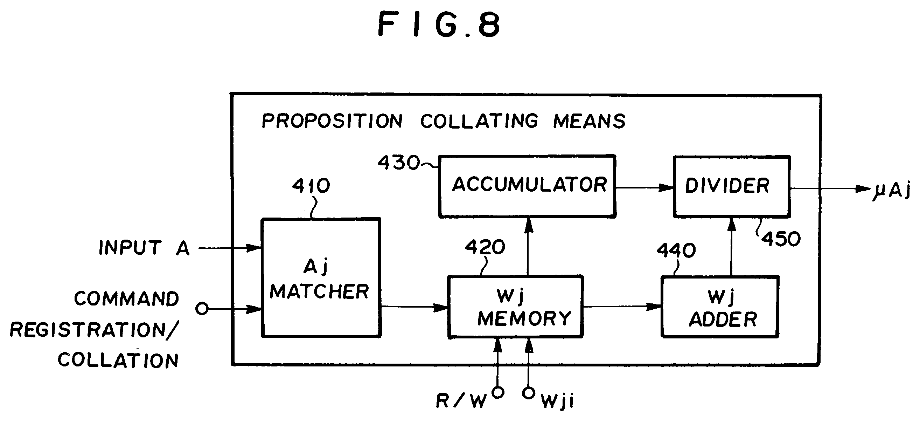

FIGURE 8 is a block diagram showing the proposition collating means 310, 320 which construct the second embodiment of the present invention. The proposition collating means 310, 320 comprises a vector comparing means 410, a weight coefficient memory 420, a sum storing means 440, a cumulative value storing means 430, and a dividing means 450. The vector comparing means 410 stores vector data which represents a proposition and collates each element thereof. The weight coefficient memory 420 outputs a weight coefficient wji corresponding to a match signal for each element received from the vector comparing means 410. The cumulative value storing means 430 cumulates weight coefficients Wji received from the weight coefficient memory 420 corresponding to the match signal and stores the cumulative value. The dividing means 450 outputs the ratio of the cumulative value wji and the sum of wji as a proposition truth value.

Assuming that an i-th element of vector data is denoted by xi, the vector comparing means stores Xi which denotes a first proposition part or a second proposition part of an inference rule. When xi is equal to Xi, the vector comparing means outputs a match signal yi = "1". Otherwise, the vector comparing means outputs yi = "0". The weight coefficient which is read from the coefficient memory 420 corresponding to the match signal yi is wji. Thus, for each vector data, the following equation is calculated.

$Sj = \Sigma \, yiwji$     (29)

The resultant value is stored in the cumulative value storing means 430. When the weight coefficient which is read from the weight coefficient memory 420 is input to the sum storing means 440 and Mj is obtained by the following equation,

$Mj = \Sigma \, wji$ (where i = 1, 2, ... , and m)     (30)

then, the similarity of a registered proposition and an input proposition can be obtained from the following equation.

$Sj / Mj = \Sigma \, yi \cdot wji / \Sigma \, wji$ (where i = 1, 2, ... , m)-     (31)

When all the values of yi are "1", the similarity becomes 1.0. This is equivalent to a membership function which gives truth values of $\mu Aj$ and $\mu Bj$.

The feature of the proposition collating means is in that a weight coefficient can be optimized in a learning period of an inference rule so as to increase a rule validity degree calculated with proposition truth values $\mu A$ and $\mu B$ which are output from the two proposition collating means 310 and 320 against a first proposition part and a second proposition part.

[Formula 4]

$\mu Aj = \Sigma \, yi \cdot waji / \Sigma \, waji$ (where i = 1, 2, ... , m)-     (32)

$\mu Bj = \Sigma \, yi \cdot wbji / \Sigma \, wbji$ (where i = 1, 2, ... , m)-     (33)

When the proposition truth values $\mu A$ and $\mu B$ are given by the above equations, for a forward inference rule, the weight coefficients wji of the weight coefficient memories 420 of the proposition collating means 310 and 320 are optimized so that the following validity degree is increased.

$fj = \mu Bj - \mu A'j$     (34)

For a backward inference rule, the weight coefficients wji thereof are optimized so that the following validity degree is increased.

$fj = \mu A'j - \mu Bj$     (35)

This weight coefficient learning algorithm according to this embodiment is much simpler than that of the conventional fuzzy inference system which incorporates a neural network in learning membership functions.

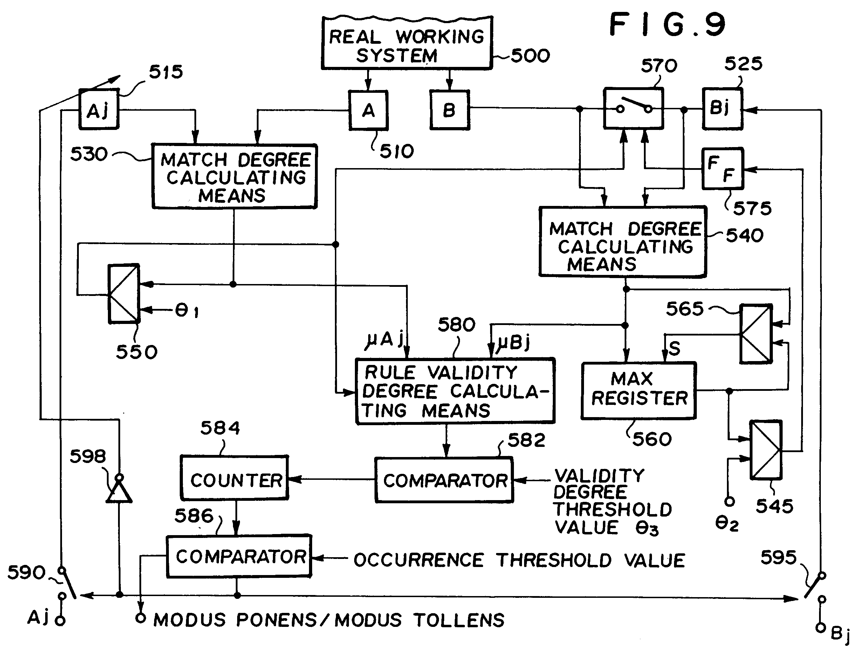

FIGURE 9 is a block diagram showing a fuzzy inference system according to a third embodiment of the present invention. This fuzzy inference system extracts a first proposition part and a second proposition part of an inference rule from a real working system. In this system, when Aj is true, a first proposition part Aj and a second proposition part Bj of an inference rule Bj is extracted from a real working system 500.

In this embodiment, the value of (A) is freely designated. Then, (B) corresponding to (A) is found. An inference rule between (A) and (B) is detected with the validity degree of the inference rule. When the validity degree is low, the value of (A) is changed. The same steps are repeated until an inference rule is found.

To execute these steps, an A-side storing means 510 stores first real data (A) received from the real working system 500. A B-side storing means 520 stores second real data (B) received from the real working system 500. First storing means 515 stores a first proposition part Aj. A second storing means 525 stores a second proposition part Bj. An A-side match degree calculating means 530 calculates a match degree $\mu$Aj of the real data (A) and the first proposition part Aj. B-side match degree calculating means 540 calculates a match degree $\mu$Bj of the real data (B) and the second proposition part Bj. Thus, the fuzzy inference system can determine whether or not a second proposition part Bj corresponding to a first proposition part Aj is present.

Detecting means 550 determines whether or not the A-side match degree $\mu$Aj is equal to or larger than a predetermined threshold value $\theta$1. Whenever $\mu$Aj is equal to or larger than the threshold value $\theta$1, a switch 570 sends the real data (B) to the first storing means 525. Maximum value storing means 560 stores the maximum value of the B-side match degree $\mu$Bj. Detecting means 565 detects the maximum value of the B-side match degree $\mu$Bj. A comparator 545 determines whether or not the maximum value is equal to or larger than a threshold value $\theta$2. When the maximum value is equal to or larger than the threshold value $\theta$2, a flip-flop (FF) 575 opens the switch 570. When $\mu$Aj is larger, Bj which gives a maximum $\mu$Bj is designated. When $\mu$Bj which is larger than a predetermined threshold value is absent, it is determined that no rule is present.

When $\mu$Bj is larger than the threshold value, a rule validity degree calculating means 580 calculates a rule validity degree fr according to the equation (10) with $\mu$Aj and $\mu$Bj. Detecting means 582 determines whether or not the rule validity degree is equal to or larger than a threshold value $\theta$3. Counting means 584 counts the number of events where the rule validity degree is equal to or larger than the threshold value $\theta$3. Detecting means 586 determines whether or not the number of events is equal to or higher than a threshold value. Data switches 590 and 595 output the contents of the storing means of the first proposition part Aj and the second proposition part Bj to the outside of the fuzzy inference system. Thus, the fuzzy inference system can determine whether or not a forward inference rule is present between Aj and Bj with frequency of occurrences of high rule validity degree. When the frequency is low, the first proposition part Aj is updated. By repeating such steps, an inference rule can be detected. Data obtained from the same real working system has two sides which are data itself and compliment thereof. Thus, as well as a set of (A) and (B), sets of (A') and (B), (A) and (B'), and (A') and (B') should be considered for obtaining inference rules.

When both (A => B) and (A => B') have high truth values $\mu$R1 and $\mu$R2, there is an inconsistency. In this case, the following relation is satisfied.

$$1-\mu A = \min(\mu R1, \mu R2) \qquad (36)$$

When both $\mu$R1 and $\mu$R2 are 1.0, $\mu$A = 0 which is an inference result of classical logic is satisfied. Such an inconsistency also takes place between (A' => B) and (A' => B').

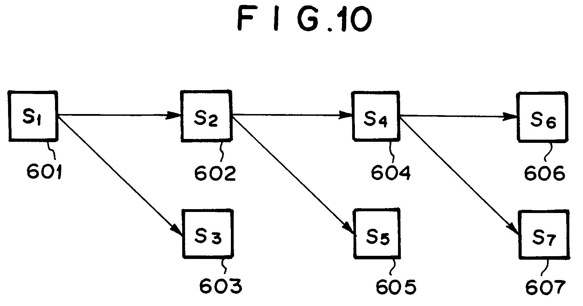

FIGURES 10 to 12 are block diagrams showing fuzzy inference systems having hierarchical construction according to fourth and fifth embodiments of the present invention. FIGURE 10 is a block diagram showing a state transition of a tree construction for hierarchical inference. In this embodiment, a first hierarchical level is an animal node S1. A second hierarchical level includes a mammal node S2 and a bird node S3. A third hierarchical level includes a carnivore node S4 and a ungulate node S5. A fourth hierarchical level includes a tiger node S6 and a cheetah node S7.

A premise where a status change to a lower level takes place is an inference rule from an upper hierarchical level (first proposition part) to a lower hierarchical level (second proposition part). This inference rule is for example the following knowledge.

Inference rule from first hierarchical level to second hierarchical level:
    S1 => S2    : (If the animal has a fur, then it is a mammal.)
    S1 => S3    :(If the animal has feathers, then it is a bird.)

Inference rule from second hierarchical level to third hierarchical level:
    S2 => S4    : (If the mammal has sharp tooth, it is a carnivore.)

S2 => S5 : (If the mammal has ungulae, it is an ungulate.)

Inference rule from third hierarchical level to fourth hierarchical level:

S4 => S6 : (If the carnivore has black stripes on a yellowish brown ground, it is a tiger.)

S4 => S7 : (If the carnivore has black spots on a yellowish brown ground, it is a cheetah.)

According to the equations (5) to (8), since

$$\mu R12 = \mu [S1 => S2] = \max [\mu S'1, \mu S2]$$

thus, truth values of inference rules are learnt as follows.

Truth value of inference rule of S1 => S2 is $\mu R12$ = max $[\mu S'1, \mu S2]$

Truth value of inference rule of S1 => S3 is $\mu R13$ = max $[\mu S'1, \mu S3]$

Truth value of inference rule of S2 => S4 is $\mu R24$ = max $[\mu S'2, \mu S4]$

Truth value of inference rule of S2 => S5 is $\mu R25$ = max $[\mu S'2, \mu S5]$

Truth value of inference rule of S4 => S6 is $\mu R46$ = max $[\mu S'4, \mu S6]$

Truth value of inference rule of S4 => S7 is $\mu R47$ = max $[\mu S'4, \mu S7]$

Inference in a plurality of hierarchical levels is performed in accordance with the theory given by the equations (7) and (8).

P1: If $\mu S'1 < \mu R12$, then $\mu S2 = \mu R12$ - (37)

P2: If $\mu S'1 < \mu R13$, then $\mu S3 = \mu R13$ - (38)

P3: If $\mu S'2 < \mu R24$, then $\mu S4 = \mu R24$ - (39)

P4: If $\mu S'2 < \mu R25$, then $\mu S5 = \mu R25$ - (40)

P5: If $\mu S'4 < \mu R46$, then $\mu S6 = \mu R46$ - (41)

P6: If $\mu S'4 < \mu R47$, then $\mu S7 = \mu R47$ - (42)

Thus, the inference is performed on a chain basis. In other words, the inference result $\mu S2$ of the premise P1 is used for the premises P3 and P4. The inference result of the premise P3 is used for the premises P5 and P6. Either $\mu S6$ or $\mu S7$ is output as a forward inference result.

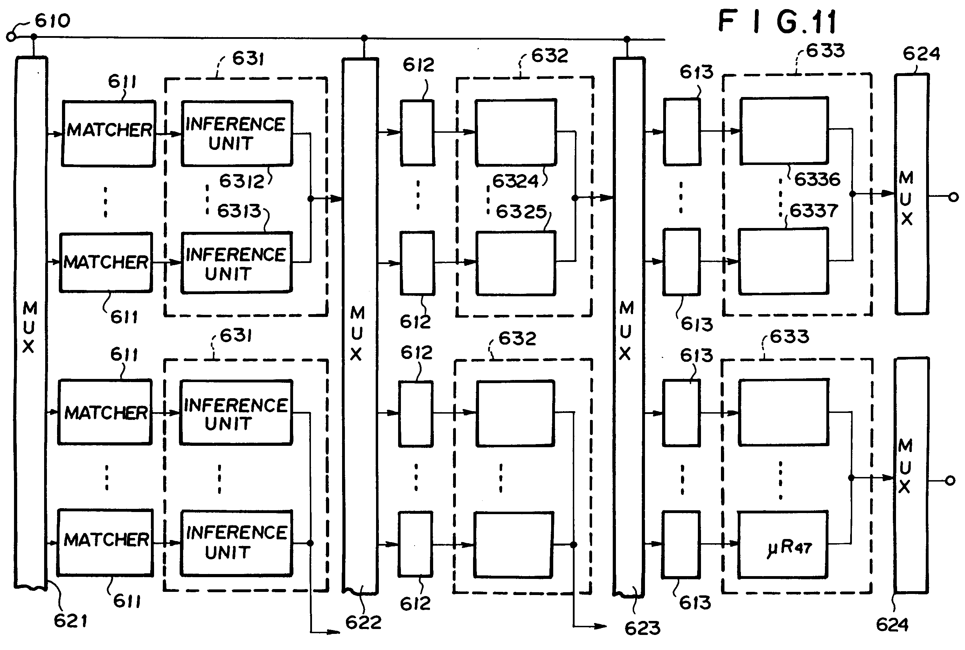

FIGURE 11 is a block diagram showing a fuzzy inference system according to the fourth embodiment of the present invention. The drawing shows tree connections of inference units which perform inference in a plurality of hierarchical levels. The inference unit arrays 631 to 633 learn truth values of inference rules. An input X is collated by proposition collating means (matchers) 611 to 613. The collated results of the matchers 611 to 613 are used as truth values of first proposition parts by the inference unit arrays 631 to 633.

In the first hierarchical level, an input proposition X (animal) is sent to a multiplexer (MUX) 621. Thus, an upper inference unit array 631 is selected. The input proposition X instead of $\mu S1$ is sent to the inference unit array 631 through the matcher 611 and the MUX 621. The matcher 611 collates the input X with propositions with respect to fur and feathers and outputs $\mu X2$ and $\mu X3$. $\mu X2$ and $\mu X3$ are substituted with $\mu S1$ of the premise equations P1 and P2 according to the equation (25) in each inference unit. Thus, the inference results are obtained. The inference validity degrees are compared and a class corresponding to an inference unit where the inequality conditions are most strongly satisfied is output. The truth values $\mu S2$ or $\mu S3$ become equal to $\mu R12$ or $\mu R13$.

After the validity degrees have been compared, assume that in the upper inference unit 6312, $\mu S2$ = $\mu R12$ is satisfied and in the lower inference unit 6313, $\mu S3 = 0$ is satisfied. In this case, the inference result causes the multiplexer (MUX) 622 to select an inference unit in the next hierarchical level. When the upper inference unit array 632 is selected, the input proposition X instead of $\mu S2$ is sent to the inference unit array 632 in the next hierarchical level through the MUX 622 and the matchers 612. The matchers 612 collate the input X with propositions with respect to carnivore and ungulate. Thus, the matchers 612 output $\mu X4$ and $\mu X5$. $\mu X4$ and $\mu X5$ are substituted with $\mu S2$ of the premises P3 and P4 according to the equation (25). Thus, an inference result in this hierarchical level is obtained.

Inference validity degrees are compared and a class corresponding to an inference unit where an inequality condition is satisfied is output. Thus, $\mu S4$ or $\mu S5$ becomes equal to $\mu R24$ or $\mu R25$. This result causes the multiplexer (MUX) 623 in the next hierarchical level to select an inference unit in the next hierarchical level.

Assume that in the inference unit 6324 of the higher hierarchical level, $\mu S4$ = $\mu R24$ is satisfied and in the inference unit 6325 in the lower hierarchical level, $\mu S5 = 0$ is satisfied. In this case, the input X is sent to the inference unit array 633 through the matchers 613. The matchers 613 collate the input X with propositions with respect to black stripes and black spots. Thus, the matchers 613 output $\mu X6$ and $\mu X7$. $\mu X6$ and $\mu X7$ are substituted with $\mu S4$ of the premises P5 and P6 according to the equation (25). Thus, an inference result is obtained. $\mu S6$ or $\mu S7$ which satisfies the inequality condition becomes $\mu R46$ or $\mu R47$. When $\mu S6 = \mu R46$ is satisfied in the inference unit 6336 of the upper hierarchical level, $\mu S7 = 0$ is satisfied in the hierarchical unit 6337 of the lower hierarchical level. In the steps described above, forward inference is performed.

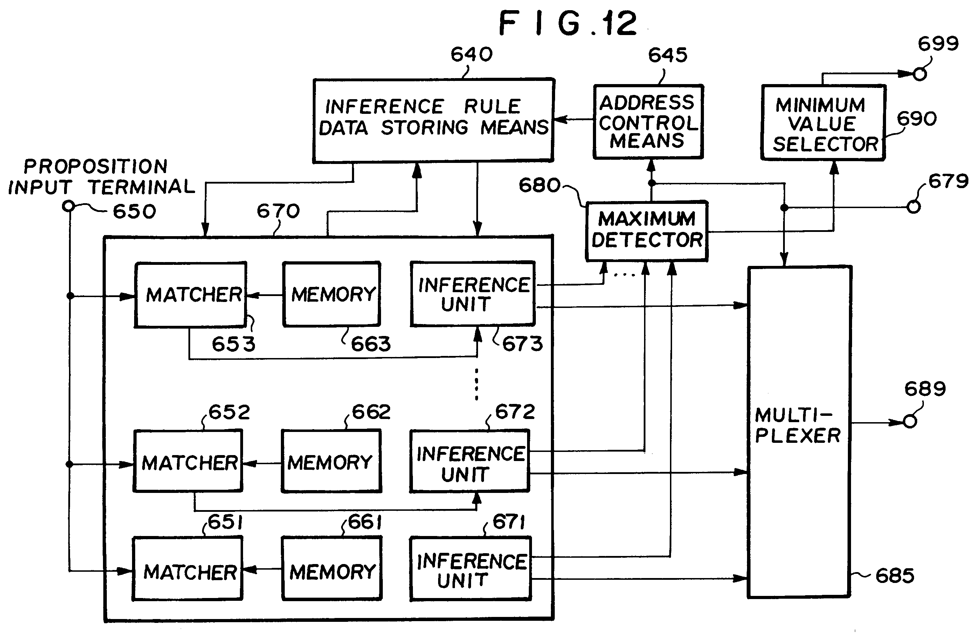

FIGURE 12 is a block diagram showing a fuzzy inference system according to the fifth embodiment of the present invention. In this embodiment, the hardware of the fuzzy inference system is not increased as the number of hierarchical levels increases. In the fuzzy inference system, only one inference unit array having one hierarchical level is used. This fuzzy inference system has an inference rule data storing means 640 and an inference chaining assisting address control means 645 so as to feed back an inference result to an input. Thus, the fuzzy inference system has only one inference unit 670 for a plurality of hierarchical classes. If each unit array had 16 classes and there were four hierarchical levels, (16 x 16 x 16 + 1) inference units 670 would be required. However, whenever an inference in each hierarchical level is completed, if an inference result, a truth value, a validity degree, and a proposition used in the inference unit array 670 are rewritten, the number of inference unit arrays 670 can be reduced to one.

In addition to the inference units 671 to 673, the multiple-class inference unit comprises proposition collating devices (matchers) 651 to 653 and learning truth value memories 661 to 663. All truth values and validity degrees thereof of rules which have been learnt from first proposition parts given in each hierarchical level and in each class are sent to inference rule data storing means 640 along with all the first proposition parts not fixed in the inference units 671 to 673. Thus, rule data of all the hierarchical levels and all the classes are stored in the inference rule data storing means 640.

Before propositions are inferred, they have been input from a proposition input terminal 650 and rule data of all the classes of a selected hierarchical level have been set to the inference unit 670. Validity degrees (fil to fim) as inference results of the propositions are converted into class code by a maximum value detector 680. With the class code, a multiplexer 685 selects an inference unit which has an inference result (truth value) with a maximum validity degree and outputs the inference result from a terminal 699.

After inference in one hierarchical level has been completed and the next hierarchical level has been determined, the address control means 645 sets all rule data of all classes of the next hierarchical level to the multiple-class inference unit 670. Thus, the multiple-class inference unit 670 executes inference for the next proposition received from the input terminal 650 and outputs a truth value and a validity degree thereof. With the validity degree, the maximum value detecting means 680 outputs code. With this code, the address control means 645 reads rule data of the next hierarchical level.

In such a manner, inference is cyclically performed on a chain basis. A truth value and a validity degree of inference as inference results of each hierarchical level are output from terminals 689 and 699, respectively. Class code of each hierarchical level which is output from the terminal 679 is an attribute of an inference result. For example, if an animal has a fur, sharp tooth, black spots, class code representing a cheetah is output from the terminal 679. The validity degree of the inference is output from the terminal 699.

If negative inference rules such that ("if the animal does not have a fur, it is not a mammal." and "if the animal does not have sharp tooth, it is not a carnivore.") have been learnt, with the theory of modus tollens, backward inference can be executed by the multiple-class inference unit 670 in each hierarchical level. When the truth value with respect to the cheetah is high, diagnostical inference representing that it is an animal can be accomplished.

With the following modus tollens

| | |
|---|---|
| S'1 => S'2 | : (If the animal does not have a fur, it is not a mammal.) |
| S'1 => S'3 | : (If the animal does not have feathers, it is not a bird.) |
| S'2 => S'4 | : (If the mammal does not have sharp tooth, it is not a carnivore.) |
| S'2 => S'5 | : (If the mammal does not have ungulae, it is not an ungulate.) |
| S'4 => S'6 | : (If the carnivore does not have black stripes on a yellowish brown ground, it is not a tiger.) |
| S'4 => S'7 | : (If the carnivore does not have black spots on a yellowish brown ground, it is not a cheetah.) |

and the following equation

$$\mu[S'4 : => S'7] = \max [\mu S'7, \mu S4],$$

if S7 is true, then it is inferred that S4 is true.

Likewise, with the result, if S4 is true, it is inferred that S2 is true.

With the result, if S2 is true, it is inferred that S1 is true.

As described above, according to the present invention, the following effects can be obtained.

1. Unlike with the related art reference, a fuzzy inference which consistently satisfies classical logic of conventional information processing system can be performed.

2. Unlike with the related art reference, inference rules and truth values can be easily optimized without the need to take a long time of several months.

3. In the related art reference which employs an inference method suitable for interpolating operations necessary for optimizing control amount of control systems, a method for representing inference results and inference rules has not been considered. Thus, the learning of optimizing rules (namely, the learning of improving the effectiveness) is difficult. However, according to the present invention, this problem is solved.

4. In the related art reference, when one of a plurality of inference rules is selected, since a composition of inference results of each class is defuzzed, inference in a plurality of hierarchical levels is not incorporated in neither forward inference nor backward inference. However, according to the present invention, this problems is solved.

5. In the related art reference, with inference rules, control steps involving intuitive judgement made by operators and designers are translated into membership functions through a particular language so as to automate them. However, since a method for introducing inference rules from systems where inference rules with respect to intuitive judgement are unknown is not available, the conventional fuzzy inference systems have not been widely used. However, according to the present invention, this problem is solved.

Thus, according to the present invention, in various information processing systems, inference rules can be extracted from knowledge information which contains ambiguity. With the extracted truth values and validity degrees, fuzzy inference can be executed. As the ambiguity of fuzzy inference approaches to zero, the fuzzy inference result approaches to inference result based on classical logic. Thus, the fuzzy inference can consistently accord with the classical logic. Consequently, the present invention can be incorporated in applications which satisfy both fuzzy inference and classical logic in information processing dealing with knowledge information.

## Claims

1. A fuzzy inference system for learning inference rules, comprising:

proposition truth value storing means (100) for storing a truth value $\mu A$ of a first proposition part (A) and a truth value $\mu B$ of a second proposition part (B) so as to learn said truth values $\mu A$ and $\mu B$, said first proposition part (A) and said second proposition part (B) being extracted from a real working system by extracting means;

rule truth value learning means (125) for learning a rule truth value $\mu R$ from a plurality of sets of said truth values $\mu A$ and $\mu B$ in a learning period;

rule validity degree learning means (135) for learning a rule validity degree fr;

rule truth value storing means (120) for storing said rule truth value $\mu R$;

rule validity degree storing means (130) for storing said rule validity degree fr;

means (165) for calculating an inference validity degree fi with said rule truth value $\mu R$ against one of said first proposition part (A) and said second proposition part (B) after said learning period;

means (170) for sotring the inference resul and for outputting said rule truth value $\mu R$ as the other truth value of said first proposition part (A) and said second proposition part (B) when fi is equal to or higher than a predetermined threshold value; and

means (190) for storing the resultant validity degree and for outputting either said rule validity degree fr or said inference validity degree fi, whichever smaller, as an inference result validity degree.

2. The fuzzy inference system according to claim 1, wherein said rule truth value learning means comprises:

bounded difference calculating means (160) for calculating a bounded difference between said truth value $\mu B$ and the complement of said truth value $\mu A$ with an output of said proposition truth value storing means (100);

bounded difference quantizing means (165) for selecting said truth value $\mu B$ as a truth value $\mu Rf$ of a forward inference rule when the absolute value of said bounded difference is equal to or larger than said threshold value and said truth value $\mu B$ is larger than the complement of said truth value $\mu A$ and for selecting the complement of said truth value $\mu A$ as a truth value $\mu Rb$ of a backward inference rule when the absolute value of said bounded difference is equal to or larger than the threshold value and said truth value $\mu B$ is smaller than the complement of said truth value $\mu A$; and

forward/backward rule truth value selecting means (180) for determining a first composition corresponding to a first learning mode of said truth value $\mu B$ or the complement of said truth value $\mu A$ and said rule truth value $\mu R$, and

wherein said rule validity degree learning means (135) comprises forward/backward rule validity degree selecting means (150) for determining a second composition corresponding to a second learning mode of said bounded difference and the content of said rule validity degree storing means (130).

3. The fuzzy inference system according to claim 2, wherein said rule truth value selecting means (180) is adapted to add the product of said rule validity degree fr and said rule truth value $\mu R$ to the product of said bounded difference and said truth value $\mu B$ and to divide the resultant value by the sum of said bounded difference and said rule validity degree fr, and wherein said rule validity degree selecting means (150) is adapted to add the product of said rule validity degree fr and said rule truth value $\mu R$ to the product of said bounded difference and said truth value $\mu B$ and to divide the resultant value by the sum of said truth value $\mu B$ and said rule truth value $\mu R$.

4. The fuzzy inference system according to claim 2, wherein said rule truth value selecting means (180) is adapted to calculate a maximum value $\mu Ro$, a minimum value $\mu Rp$, and an average value $\mu Ra$ with said truth value $\mu B$ or the complement of said truth value $\mu A$, whichever larger, read from said proposition truth value storing means in said learning period and said rule truth value $\mu R$ stored in said rule truth value storing means (120) and to select one of said maximum value $\mu Ro$, said minimum value $\mu Rp$, and said average value $\mu Ra$, and wherein said rule validity degree selecting means (150) is adapted to select the minimum value of said bounded difference and said rule validity degree fr.

5. A fuzzy inference system for learning inference rules, comprising:

proposition collating means (310) for outputting truth values corresponding to first proposition parts A1, A2, ..., and Am and second proposition parts B1, B2, ... , and Bm of a plurality of inference rules corresponding to a plurality of classes;

proposition truth table storing means (340, 350) for storing said truth values corresponding to respective classes;

a plurality of fuzzy inference units (330) including rule truth value learning means for learning a rule truth value $\mu Rj$ for each class, rule validity degree learning means (135) for learning a rule validity degree frj, rule truth value storing means for storing said rule truth value $\mu Rj$, rule validity degree storing means (130) for storing said rule validity degree frj, inference result storing means (170) for outputting said rule truth value $\mu Rj$ as the other truth value inferred from a truth value $\mu X$ of a first proposition part (A) or a second proposition part (B) after a learning period, and result validity degree storing means (190) for outputting a rule validity degree fr or an inference validity degree fij, whichever smaller, calculated with said truth value $\mu X$ and said rule truth value $\mu Rj$ as an inference result validity degree;

maximum value detecting means (360) for detecting a class j which has the maximum value of said inference validity degrees fij which are output from said inference units; and

truth value selecting means (370) for selecting and outputting the content of said inference result storing means of a fuzzy inference unit corresponding to said class j.

6. The fuzzy inference system according to claim 5, wherein said proposition collating means (310) comprises:

vector comparing means (410) for storing vector data representing a proposition and for collating each element thereof;

weight coefficient memory (420) for outputting a weight coefficient corresponding to an element match signal received from said vector comparing means;

sum storing means (430) for calculating and storing the sum of weight coefficients;

cumulative value storing means (440) for cumulating and storing weight coefficients which are output from said weight coefficient memory corresponding to element match signals which are output from said vector comparing means corresponding to propositions being input; and

division means (450) for calculating the ratio of said cumulative value and said sum and for outputting the result as a proposition truth value,

whereiby said weight coefficients are updated so that said rule validity degree is improved during said learning period.

7. The fuzzy inference system according to claim 1, wherein said extracting means comprises:

real data storing means for storing real data obtained from a real working system (500) comprising first storing means (510) for storing said first proposition part (A)and second storing means (520) for storing said second proposition part (B);

first match degree calculating means (530) for calculating a (B) match degree of real data (B) and said second proposition part (B);

second match degree calculating means (540) for calculating an (A) match degree of real data (A) and said first proposition part (A);

maximum value detecting means (550) for detecting the maximum value of said (B) match degree;

a switch (570) for sending said real data (B) to said second storing means when said maximum value is detected;

validity degree calculating means (580) for calculating a rule validity degree with said (A) match degree and said (B) match degree;

means (582, 584) for detecting a probability of which said rule validity degree is equal to or higher than a predetermined threshold value; and

a data switch (590, 595) for outputting the contents of said first storing means and said second storing means to the outside of said system when said probability is equal to or higher than said threshold value, and

wherein the content of said first storing means (510) is updated when said probability is equal to or lower than said threshold value.

8. A fuzzy inference method for learning inference rules, comprising the steps of:

classifying each of said inference rules into a plurality of hierarchical classes;

storing said inference rules in an inference unit array having a plurality of inference units disposed in a tree shape;

selecting an inference unit array of a lower hierarchy corresponding to inference results of said inference units of upper hierarchy;

collating input propositions from the selected inference units by proposition collating means of each inference unit; and

selecting inference units of a lower hierarchy corresponding to the collated results.

9. A fuzzy inference system for learning inference rules, comprising:

an inference unit array (631) having a plurality of inference units (6312, 6313, ...), each of which has proposition collating means corresponding to said inference rules corresponding to respective classes;

hierarchical inference rule data storing means (640) for storing hierarchical inference rule data so as to set a truth value, a validity degree, and a proposition of each of said hierarchical inference rule to said inference unit array; and

chain inference assisting means (645) for setting inference rule data of a lower hierarchy or a higher hierarchy selected by a class inferred in each hierarchical layer to said inference unit array,

wherein each of said inference unit is adapted to learn an inference rule and a proposition and to store the results in said hierarchical inference rule data storing means.

# F I G .1

PORTION OPERATING IN LEARNING PERIOD

PORTION OPERATING IN INFERENCE PERIOD

EP 0 607 613 A1

# F I G . 2

# F I G . 3

# F I G . 4

230

231

232

QUANTIZER

233

# F I G . 5

242

241

STORING
MEANS

234

240

# F I G . 6

251

253

COMPARATOR
(COM)

180

252

MULTIPLEXER
(MUX)

255

254

F I G.7

# F I G . 8

PROPOSITION COLLATING MEANS

INPUT A → 410 Aj MATCHER

COMMAND REGISTRATION/ COLLATION

430~ ACCUMULATOR

DIVIDER → μAj

420 Wj MEMORY

440 Wj ADDER

450

R/W    Wji

EP 0 607 613 A1

FIG.9

# F I G .10

F I G.11

EP 0 607 613 A1

# F I G .12

EP 0 607 613 A1

# F I G.13

$A_1(X)$  710  COLLATION RESULT $A_1(xo)$  $B_1(y)$

720  min CALCULATION RESULT B1

$x_o$  X

730

max CALCULATION RESULT BO(y)  $y_o$  y

710  COLLATION RESULT $A_2(xo)$  $B_2(y)$

$A_2(X)$  720

$x_o$  min CALCULATION RESULT B2  y

European Patent Office

**EUROPEAN SEARCH REPORT**

Application Number

EP 93 12 0908

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | US-A-5 165 011 (HISANO)<br>* abstract; figure 1 *<br>--- | 1 | G06F7/00<br>G06F15/18<br>G06F9/44 |
| A | FUZZY SETS AND SYSTEMS<br>vol. 34, no. 3 , 26 February 1990 ,<br>AMSTERDAM NL , XP276744<br>SCHNEIDER ET AL 'Applications of the<br>negation operator in fuzzy production<br>rules'<br>* abstract *<br>--- | 1 | |
| A | PATENT ABSTRACTS OF JAPAN<br>vol. 15, no. 79 (P-1170)25 February 1991<br>& JP-A-02 297 113 (HITACHI)<br>* abstract *<br>----- | 1 | |

TECHNICAL FIELDS SEARCHED (Int.Cl.5)

G06F

The present search report has been drawn up for all claims

| Place of search | Date of completion of the search | Examiner |
|---|---|---|
| THE HAGUE | 18 May 1994 | Cohen, B |

EPO FORM 1503 03.82 (P04C01)